# EUROPEAN PATENT APPLICATION

(11) **EP 4 703 127 A2**
(43) Date of publication of application: **04.03.2026**
(21) Application number: 25192849.5
(22) Date of filing: 30.07.2025
(51) Int. Cl.: B29C 70/22, B23B 27/08, B29C 70/54, B29D 99/00

(54) **KINKED COMPOSITE STRUCTURE**

(30) Priority: 28.08.2024 GB 202412569
(71) Applicant: Airbus Operations Limited, Bristol BS34 7PA (GB)
(72) Inventor: BARNETT, Thomas, Bristol, BS34 7PA (GB)
(74) Representative: Ribeiro, James Michael

(57) **Abstract**

A composite structure comprising: a stack of composite plies, each composite ply comprising a layer of fibres. The stack is formed with a kink with an inner side and an outer side. At least one of the plies is a cut ply with an array of cuts located at the kink. Each cut severs a group of the fibres of the cut ply; and the array of cuts comprises a first row of cuts and a second row of cuts separated by a gap. The first row of cuts is closer to the inner side of the kink than the second row of cuts. The gap provides a load path across the array.

## Description

### FIELD OF THE INVENTION

The present invention relates to a composite structure comprising a stack of composite plies, where the stack is formed with a kink. The invention also relates to a method of manufacturing a stack of fibre plies.

### BACKGROUND OF THE INVENTION

A composite wing spar with two angle changes, or "kinks", over its length is described in https://www.compositesworld.com/articles/one-piece-one-shot-17-meter-wing-spar-for-high-rate-aircraft-manufacture, published on 28 October 2022.

Typically, such a structure would require cutting and darting of the fabric to avoid wrinkling. Such cutting and darting can degrade strength properties of the structure, so a shearing technique is used instead to avoid wrinkling.

### SUMMARY OF THE INVENTION

A first aspect of the invention provides a composite structure comprising: a stack of composite plies, each composite ply comprising a layer of fibres; wherein the stack is formed with a kink; the kink has an inner side and an outer side; at least one of the plies is a cut ply with an array of cuts located at the kink; each cut severs a group of the fibres of the cut ply; and the array of cuts comprises a first row of cuts and a second row of cuts, wherein the first row of cuts is closer to the inner side of the kink than the second row of cuts.

The first row of cuts and second row of cuts are separated by a gap which provides a load path across the array. Optionally the gap is a serpentine gap which provides a serpentine load path across the array.

The kink is an in-plane kink in which the fibres of the cut ply bend within a plane of the cut ply. The array of cuts provide relief from such in-plane bending.

Optionally the first row of cuts overlaps with the second row of cuts.

Optionally the cut ply has no unsevered fibres which provide a continuous load path across the array via the gap.

Optionally the array of cuts has a tapered profile which becomes gradually narrower towards the inner side of the kink.

Optionally the tapered profile is a triangular tapered profile

Optionally the array comprises three or more rows of cuts, each row comprising one or more cuts or each row comprising two or more cuts.

Optionally the first row of cuts is an innermost row of the array (i.e., with no further rows closer to the inner side of the kink), and the second row of cuts is an outermost row of the array (i.e. with no further rows closer to the outer side of the kink).

Optionally the array comprises three or more rows of cuts, and the number of cuts per row decreases monotonically towards the inner side of the kink, typically for the entire array.

Optionally a difference in the number of cuts between the first row and the second row is four or more.

Optionally each row of the array has a unique number of cuts.

Optionally the cut(s) of the first row are offset from the cut(s) of the second row.

Optionally the first and second row each comprise a plurality of cuts.

Optionally a number of cuts in the first row is less than a number of cuts in the second row.

Optionally the cut ply is a 0° ply comprising unidirectional 0° fibres; at least one of the plies is a bias ply comprising unidirectional bias fibres which each run at an oblique angle to the unidirectional 0° fibres; and the bias ply does not have an array of cuts located at the kink.

Optionally each cut has a relatively narrow end towards the inner side of the kink and a relatively wide end towards the outer side of the kink.

Optionally some of the fibres are severed by a plurality of the cuts.

Optionally some of the fibres are severed by a plurality of the first row of cuts; and some of the fibres are severed by a plurality of the second row of cuts.

Optionally the array of cuts comprises a third row of cuts between the first row of cuts and the second row of cuts, wherein a number of cuts in the third row is more than a number of cuts in the first row and less than a number of cuts in the second row.

A further aspect of the invention provides an aircraft comprising a composite structure according to the first aspect.

A further aspect of the invention provides a method of manufacturing a stack of fibre plies, each fibre ply comprising a layer of fibres, the method comprising: cutting at least one of the plies to provide a cut ply with an array of cuts, wherein each cut severs a group of fibres of the cut ply; and forming a kink in the stack, wherein the kink has an inner side and an outer side, the arrays of cuts is located at the kink, the array of cuts comprises a first row of cuts and a second row of cuts, and the first row of cuts is closer to the inner side of the kink than the second row of cuts.

The first row of cuts and second row of cuts are separated by a gap which provides a load path across the array. Optionally the gap is a serpentine gap which provides a serpentine load path across the array.

Optionally a number of cuts in the first row is less than a number of cuts in the second row.

Optionally the array of cuts has a tapered profile which becomes gradually narrower towards the inner side of the kink.

Optionally the fibres are severed by a rotary cutter comprising a roller with an array of blades protruding from the roller.

Optionally the method further comprises laying up the plies one-by-one to assemble the stack.

Optionally the method further comprises cutting an outer periphery of each ply before it is laid up.

Optionally the array of cuts is formed in the cut ply before the cut ply is laid up.

Optionally each ply in the stack is formed with an individual kink, and the individual kink in the cut ply is formed after the array of cuts is formed in the cut ply.

Optionally the kink is formed by draping the plies onto a forming a tool; and deforming the plies with the forming tool to form the kink.

Optionally each cut opens up to form a tapered dart with a relatively narrow end towards the inner side of the kink and a relatively wide end towards the outer side of the kink.

A further aspect of the invention provides a rotary cutter configured to cut a fibre layer, the rotary cutter comprising: a roller configured to rotate about an axis which extends in an axial direction from a first end of the roller to a second end of the roller; and an array of blades protruding from the roller, wherein the array of blades comprises a first row of blades and a second row of blades, and the first row of blades is closer to the first end of the roller than the second row of blades.

The first row of blades and the second row of blades are separated by a gap, which maybe a serpentine gap.

Optionally the array of blades has a tapered profile which becomes gradually narrower in the axial direction.

Optionally the first row of blades overlaps with the second row of blades.

Optionally a number of blades in the first row is less than a number of blades in the second row.

Optionally the array of blades comprises three or more rows of blades, and the number of blades per row decreases monotonically towards the first end of the roller, typically for the entire array.

### BRIEF DESCRIPTION OF THE DRAWINGS

Embodiments of the invention will now be described with reference to the accompanying drawings, in which:
Figure 1 shows a composite spar;
Figure 2 shows an aircraft with a wing containing the spar of Figure 1;
Figure 3 shows a system for manufacturing the spar;
Figure 4 shows a dry-fibre ply being laid onto a partial ply stack on a forming tool;
Figure 5 shows a debulking process;
Figure 6 shows a ply lay-up sequence;
Figure 7 shows the spar of Figure 1 with an enlarged view of a cut ply at the kink;
Figure 8 shows a rotary cutter;
Figure 9 is a cross-sectional view showing a row of blades protruding from a roller;
Figure 10 is a plan view of an array of cuts in a cut ply before the cut ply is deformed to form a kink;
Figure 11 is a plan view of the array of cuts after the cut ply has been deformed to form the kink;
Figure 12 is a plan view of an alternative array of cuts in the cut ply where the adjacent rows are precisely aligned with each other, without overlapping;
Figure 13 is a plan view of an alternative array of cuts in the cut ply with no overlap between adjacent rows; and
Figure 14 is a plan view of an irregular array of cuts in the cut ply with no taper.

### DETAILED DESCRIPTION OF EMBODIMENT(S)

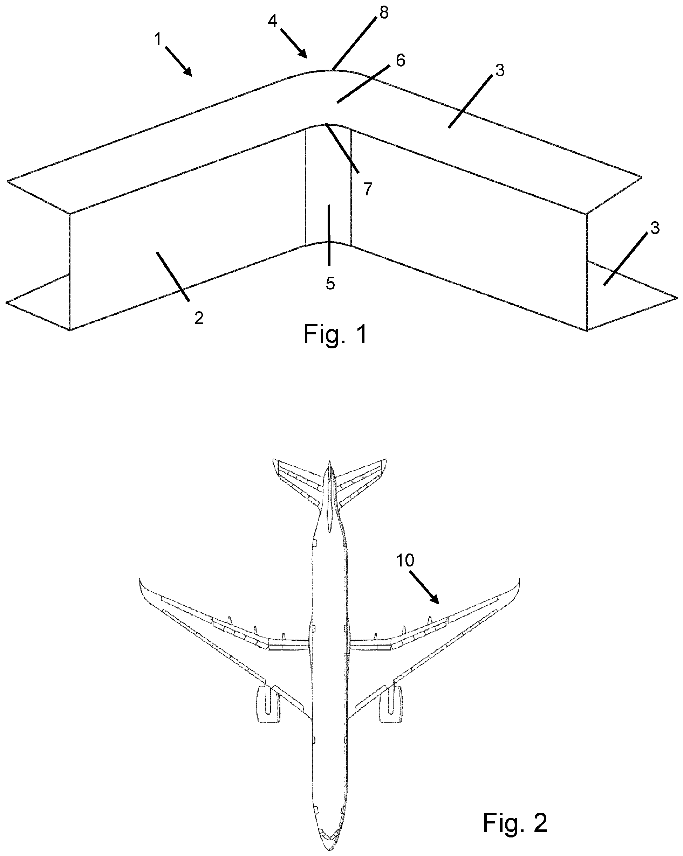

Figure 1 shows a composite structure 1 in accordance with an embodiment of the invention. In this example the composite structure 1 is a spar of a wing 10 of an aircraft shown in Figure 2. The length of the spar 1 runs in a spanwise direction from the root of the wing 10 towards the tip of the wing 10.

The spar 1 has a C-shaped cross-section with a web 2, and a pair of flanges 3. The spar 1 is formed as a single piece of composite material, with a kink 4 part way along its length. The angle of the kink 4 is highly exaggerated in Figure 1 for purposes of illustration.

The kink 4 comprises an out-of-plane kink 5 in the web 2, and in-plane kink 6 in each of the flanges 3. Each in-plane kink 6 has an inner side 7 and an outer side 8. The inner side 7 forms a concave inner edge of the kink 6 and the outer side 8 forms a convex outer edge of the kink 6.

The term "kink" is used herein to refer to a curved section which joins two uncurved (or less curved) sections.

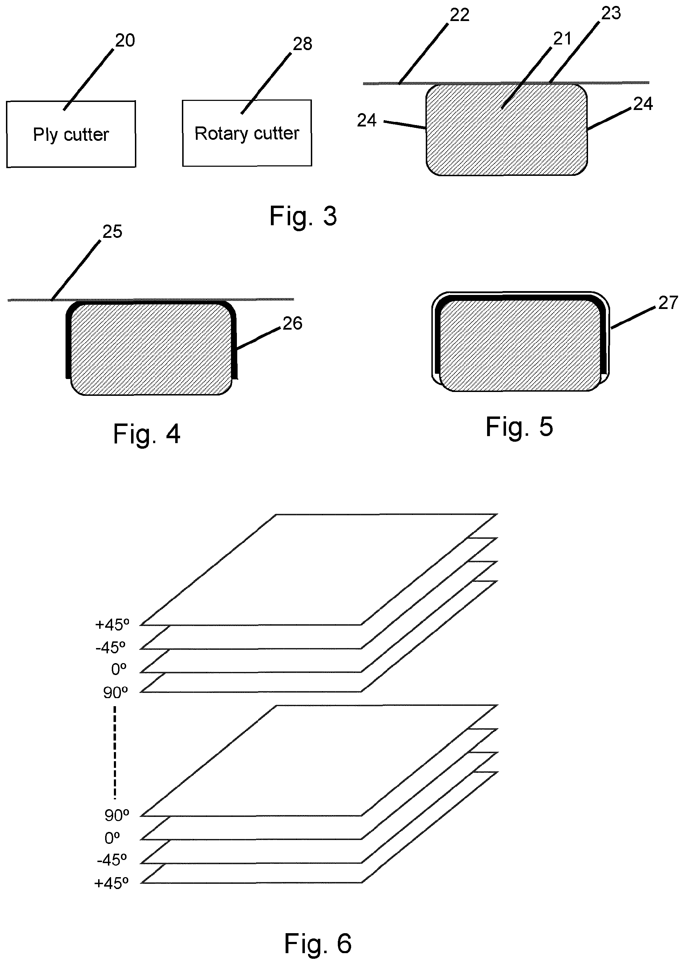

The spar 1 comprises a stack of composite plies which may be manufactured by the process shown in Figures 3-5. Each ply comprises a layer of unidirectional carbon fibres impregnated with a matrix such as an epoxy resin. The stack is assembled as a stack of dry-fibre plies which are pre-formed into the required shape and then injected with the matrix material.

As shown in Figure 3, a ply cutter 20 cuts to shape an outer periphery of each dry-fibre ply from a roll of dry-fibre. The dry-fibre plies are then laid up one-by-one on a male forming tool 21 to assemble the stack. The first dry-fibre ply of the stack is shown in Figure 3 and labelled 22.

The forming tool 21 has an upper surface 23 which is shaped to form the web 2 of the spar 1, and a pair of side surfaces 24 which are shaped to form the flanges 3 of the spar 1. Hence the upper surface 23 has an out-of-plane kink which forms the out-of-plane kink 5 in the web 2, and each side surface 24 has an in-plane kink which forms the in-plane kink 6 in a respective one of the flanges 3.

The kinks 5, 6 are formed by draping the plies onto the forming tool 21, and deforming the plies with the forming tool to form the kinks 5, 6. More specifically, each ply is laid onto the forming tool 21 as shown in Figure 3; the sides of the ply drape down to form the flanges 3 as shown in Figure 4, and the ply is pressed against the surfaces 23, 24 to form the kinks and any other features. Each ply may be pressed by hand or by one or more compaction rollers.

Figure 4 shows a dry-fibre ply 25 being laid onto a previously laid partial stack 26 of dry-fibres.

Every four plies or so, a vacuum bag 27 shown in Figure 5 may be fitted and evacuated to consolidate (debulk) the stack.

Once the stack has been fully assembled and debulked, epoxy resin is injected into the stack and cured to form the final product.

The unidirectional fibres in each ply extend at a particular angle to the lengthwise direction of the spar. Some of the plies are 0° plies with unidirectional 0° fibres extending in the lengthwise direction, others are bias plies with unidirectional fibres which run at an oblique angle (typically +/-45°) to the 0° fibres, and others are 90° plies with unidirectional fibres which run at 90° to the 0° fibres. Figure 6 shows a typical arrangement of plies with bias plies at the top and bottom of the stack, and a lay-up which is symmetrical about a mid-line of the stack. Every fourth ply in the stack is a 0° ply.

The kink 6 is an in-plane kink in which the fibres of each composite ply bend within a plane of the ply.

A problem with forming the in-plane kink 6 in the 0° plies is that the fibres on the outer side of the kink 6 must travel further than the fibres on the inner side of the kink 6. This can result in wrinkles in the fibres towards the inner side of the kink 6.

A solution to this problem, not according to the present invention, is to form a single dart in each 0° ply, by cutting the ply all the way from the inner side 7 of the kink 6 to the outer side 8 of the kink 6. A problem with this solution is that load carried by the 0° fibres must transfer to adjacent plies in the stack, via the resin-rich region between the plies. Hence the single dart forms a weakness in an area (the kink 6) where there is already a stress concentration.

In accordance with an embodiment of the present invention, each 0° ply is cut with a rotary cutter 28 shown in Figure 3, to form an array 30 of cuts at each in-plane kink 6. As explained in more detail below, an array of cuts is formed at the kink, rather than a single dart. Gaps through the array provide load paths across the array, which means that load can remain in the plane of the cut ply rather than transferring to adjacent plies.

Note that the bias plies and the 90° plies are not cut by the rotary cutter 28, so they do not have an array of cuts located at the kink 6. This is because these plies have less tendency to form wrinkles.

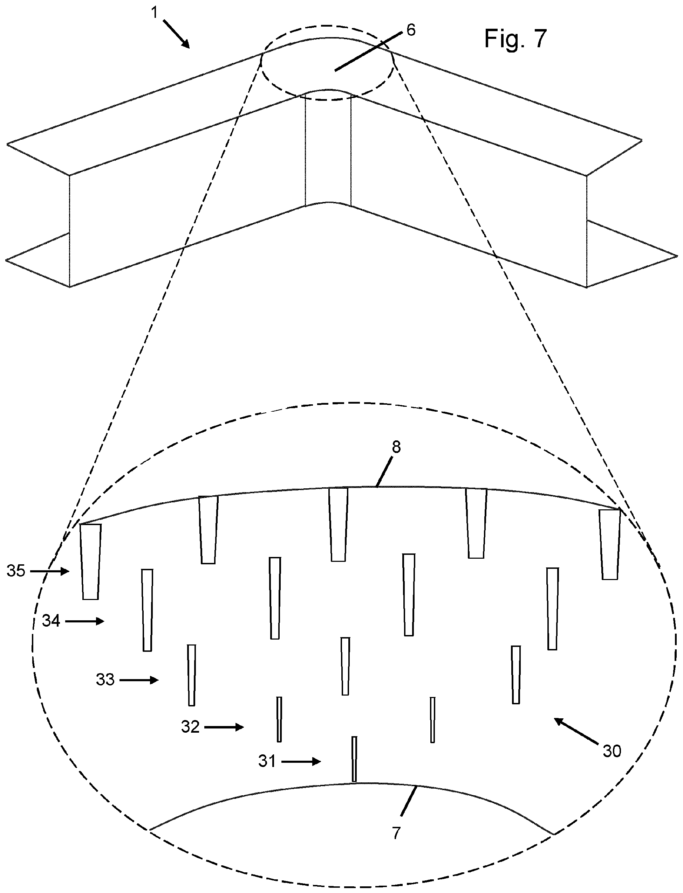

Figure 7 shows an enlarged view of one of the 0° plies at the kink 6. The 0° ply is a cut ply with an array 30 of cuts located at the kink 6. The array 30 comprises five rows of cuts 31-35, each row comprising one or more cuts. Figure 7 shows the entire array 30.

An advantage of providing a two-dimensional array 30 of cuts at the kink 6, rather than a single cut, is it allows the cuts to be spread over a wider area whilst still allowing formation of the kink without wrinkling of the fibres.

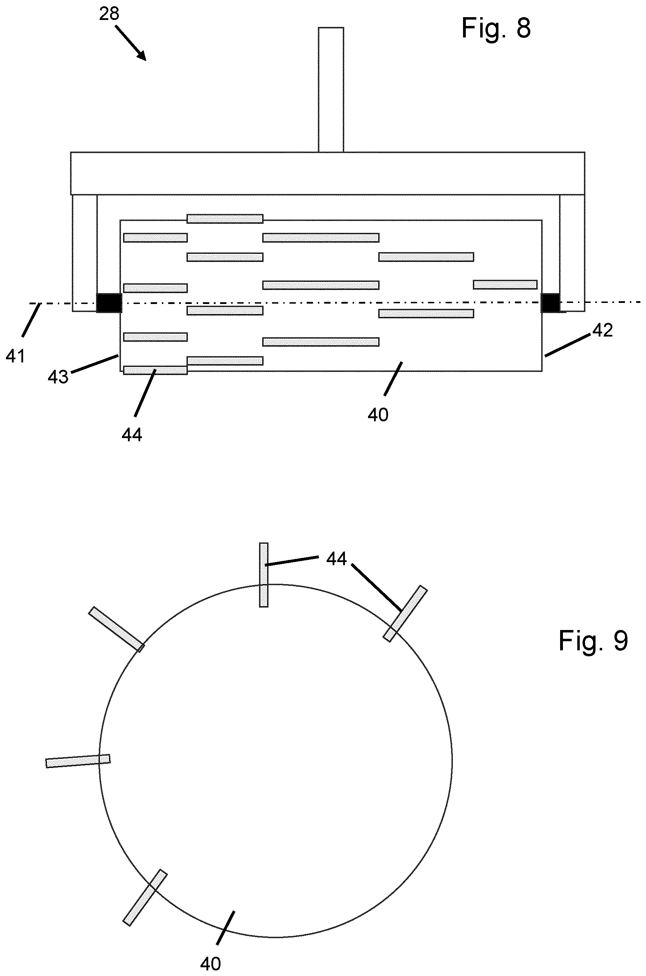

The rotary cutter 28 comprises a cylindrical roller 40 shown in detail in Figures 8-10. The roller 40 is mounted on a fixture so that it is configured to rotate about an axis 41 which extends in an axial direction from a first end 42 of the roller to a second end 43 of the roller. An array of blades protrudes from the roller 40. The array comprises a series of rows of blades, each row comprising one or more blades. The blades(s) in each row are offset from the blades(s) in the adjacent row(s) in the series.

Figure 9 is a cross-sectional view showing the row of blades at the second end 43 of the roller. In this case the row has five blades 44. The other rows of blades are similar, but with fewer blades.

The roller 40 may be cylindrical as shown, or it may be conical to enable it to run round the kink. If the roller 40 is conical then the second end 43 of the roller, which follows the outer side of the kink 6, will be the wide end of the cone.

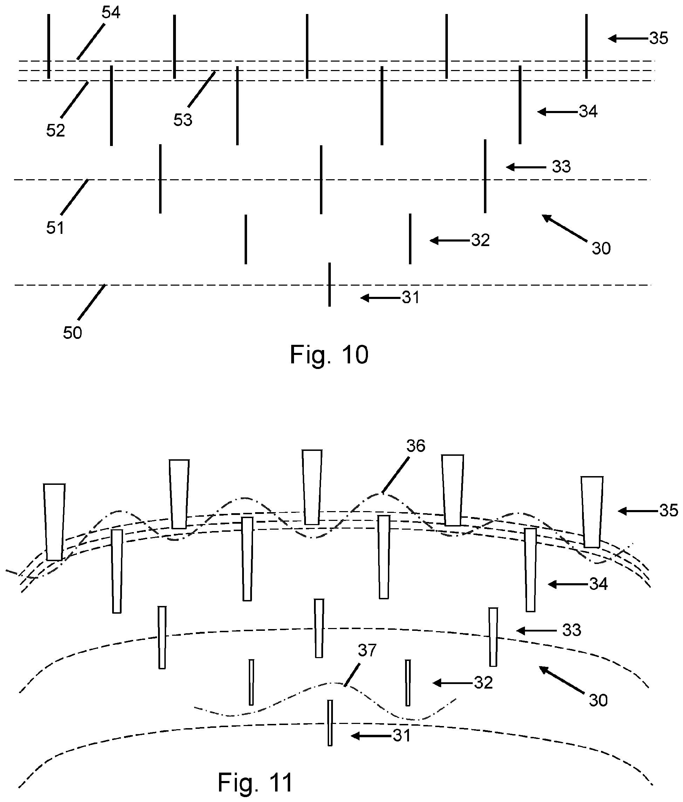

Figure 10 shows an array 30 of cuts in the cut ply, before the cut ply has been laid up and deformed to form the in-plane kink 6. Each cut is formed by a respective one of the blades of the rotary cutter 28. Each cut severs a group of the fibres of the cut ply.

Each fibre is typically 7 micron in diameter, and each cut typically severs a large number of fibres. The array 30 in Figure 10 has only five rows 31-35 of cuts, but this is highly schematic and more typically there will be a larger number of rows. In this example, the outermost row 35 has four more cuts than the innermost row 31, but if there are a larger number of rows then the outermost row 35 may have a much larger number of cuts. In general a difference in the number of cuts between the first (innermost) row 31 and the second (outermost) row 35 is four or more, but the difference may be much larger.

By way of non-limiting example each cut may be 1-5mm long, so approximately 140-700 fibres are severed by each cut. The smaller the cuts the better.

Figure 10 illustrates five fibres 50-54 by way of example. Fibre 50 is severed by the single cut in the innermost row 31 of cuts at the concave inner side of the kink; fibre 51 is severed by the three cuts of the middle row 33; and fibres 52-54 are severed by the cuts in the rows 34, 35 of cuts at the outer side of the kink. The row 35 is the outermost row, at the convex outer side of the kink, with no further rows closer to the outer side of the kink.

Some of the fibres are severed by a plurality of the cuts of the array 30. For example the fibre 54 is severed by all five cuts of the outermost row 35, the fibre 52 is severed by all four cuts of the next row 34, and the fibre 53 is severed by all nine cuts of the two rows 34, 35. Other fibres are severed only once: for example the fibre 50 at the inner side of the kink.

Each ply in the stack is formed with an individual kink, and the individual kink in the cut ply is formed on the tool 21 after the array 30 of cuts is formed in the cut ply by the rotary cutter 28. Figure 11 shows the array 30 of cuts after the kink has been formed in the cut ply.

As shown in Figure 11, the fibres are in tension as they are bent to form the kink 6, so each cut opens up to form a tapered dart with a relatively narrow end towards the inner side of the kink and a relatively wide end towards the outer side of the kink.

Consider the two rows of cuts 34, 35 at the outer side of the kink: the first row 34 being closer to the inner side of the kink than the second row 35. The two rows 34, 35 of cuts are separated by a gap which provides a load path 36 across the array 30 and around the outer circumference of the kink 6.

The load path 36 may be a serpentine load path, i.e. it turns to the left and to the right as it crosses the array 30 as shown in Figure 11. As it turns to the left and right, load is transferred from fibre-to-fibre within the cut ply, but does not need to transfer to adjacent plies in the stack. In the case of Figure 11, the load transferred by the load path 36 is carried by the three fibres 52-54 (along with a large number of other adjacent fibres in the cut ply).

A similar load path is provided between each adjacent pair of rows in the array 30. Consider for example the two rows 31, 32 of cuts at the inner side of the kink: the first row 31 being closer to the inner side of the kink than the second row 32. The two rows 31, 32 of cuts are separated by a gap which provides a serpentine load path 37 across the array 30 and around the inner circumference of the kink 6.

In the example of Figure 11, each row of cuts 31-35 in the array 30 overlaps with the adjacent row of cuts. As a result the cut ply has no unsevered fibres which provide a continuous load path across the array 30 via a gap between adjacent rows.

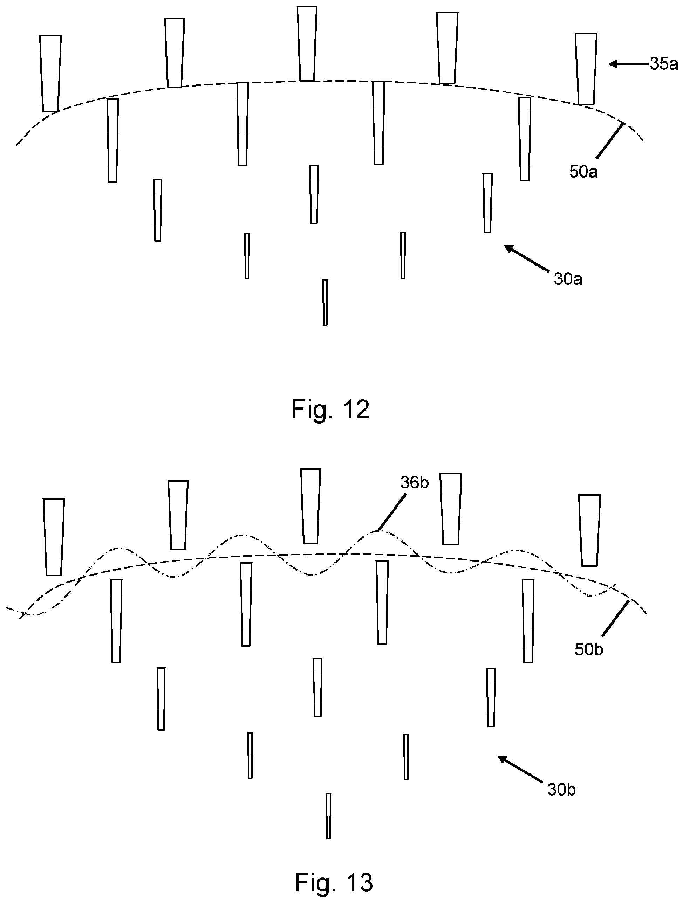

Figure 12 shows an alternative array 30a of cuts where there is no overlap between the rows. In this case each row of cuts is precisely aligned with the adjacent row so there are still no unsevered fibres which provide a continuous load path across the array 30a via a gap between adjacent rows, but each fibre is cut by only a single row. Figure 12 shows a single fibre 50a which is cut by the bottom edge of the outer row 35a of cuts.

The arrangement of Figure 11 is preferred over the arrangement of Figure 12 because the rows of cuts in Figure 12 must be very precisely aligned to ensure that for the cut ply all fibres across the kink are severed.

Figure 13 shows an alternative array 30b where there is no overlap between the rows of cuts, and the rows are separated so there are continuous (unsevered) fibres which provide a continuous load path across the array 30 via a gap between adjacent rows. An example of such a continuous fibre 50b is shown in Figure 12. Although there is still a serpentine load path 36b, a large part of the load will be carried by the continuous fibres. The arrangement of Figure 13 is less preferred than the arrangements of Figures 11 and 12 because the continuous fibre 50b may have a tendency to wrinkle.

Each array 30, 30a, 30b of cuts has a tapered profile which becomes gradually narrower towards the inner side of the kink, with the number of cuts in each row reducing towards the inner side of the kink. In this example the tapered profile is a triangular tapered profile, with only a single cut in the row 31 at the inner side of the kink. Other non-triangular tapered profiles are possible. The tapered profile reduces the number of cuts required, because fewer cuts are needed towards the inner side of the kink.

A number of cuts in the first row 31 (in this case, one cut) is less than a number of cuts in the second row 35 (in this case, five cuts). The array of cuts further comprises a third row 33 of cuts between the first row 31 of cuts and the second row 35 of cuts. A number of cuts in the third row 33 (in this case, three cuts) is more than the number of cuts in the first row 31 and less than the number of cuts in the second row 35. The other intermediate rows 32, 34 also have intermediate numbers of cuts (in this case, two and four cuts respectively).

In the examples shown in Figures 1-13 the number of cuts per row reduces for each row of the array 30, 30a, 30b, across the entire array, so each row of the array 30, 30a, 30b has a unique number of cuts (unique in the sense that the unique number of cuts is not repeated in the array). In other embodiments some of the rows may have the same number of cuts. For instance each intermediate row 32-34 between the first and second rows 31, 35 may have two, three or four cuts. This provides a tapered profile in which the number of cuts per row decreases monotonically (i.e. for the entire array the number of cuts decreases or stays the same, without increasing) towards the concave inner side of the kink, but the profile is not triangular.

In the embodiments above, a number of cuts in the first row 31 is less than a number of cuts in the second row 35. This is advantageous because it reduces the number of cuts required on the inner side of the kink, improving the load-bearing performance.

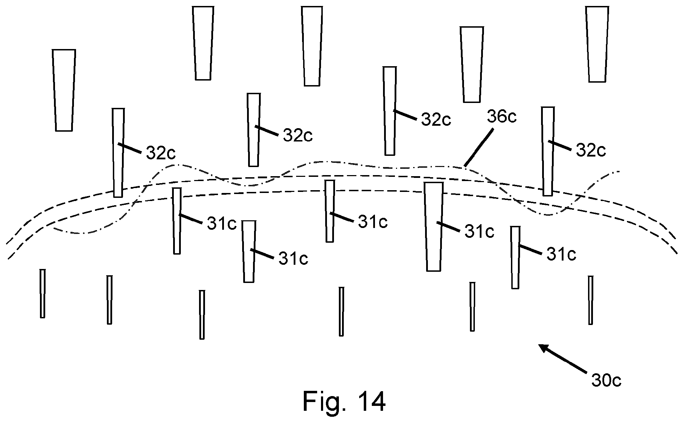

Figure 14 shows an alternative array 30c where the array 30c does not have a tapered profile, and the number of cuts in the innermost row is not less than a number of cuts in the outermost row. Also, the array 30c is more irregular than the arrays of Figures 11-13. Consider two rows of cuts in the array 30c: the first row 31c being closer to the inner side of the kink than the second row 32c. The two rows 31c, 32c of cuts are separated by a gap which provides a serpentine load path 36c across the array 30c and around the kink. In this case there is a small degree of overlap between the adjacent rows 31c, 32c so there are no unsevered fibres which provide a continuous load path across the array 30c via the gap between the adjacent rows 31c, 32c.

Returning to Figure 8, the array of blades of the roller is arranged in an appropriate pattern to form the array 30 of cuts shown in Figure 10. Consider for example the two rows of blades at the second end 43 of the roller 40: the first row of blades being closer to the first end 42 of the roller than the second row of blades. A number of blades in the first row (in this case, four blades) is less than a number of blades in the second row (in this case, five blades). These rows of blades form the two rows 34, 35 of cuts towards the outer side of the kink, and are separated by a serpentine gap. Similar gaps are provided between the other pairs of adjacent rows of blades.

In order to provide a tapered array 30 of cuts, the array of blades has a tapered profile which becomes gradually narrower in the axial direction 41.

The array of blades comprises three or more rows of blades (in this case, five rows) and the number of blades per row decreases monotonically towards the first end 42 of the roller, for the entire array.

In this example, the stack is laid up as dry-fibre plies 22, 25 which are subsequently infused with resin. In other embodiments of the invention, the fibres plies may be cut and laid up as prepreg - i.e. fibres plies pre-impregnated with resin or another matrix material. A dry-fibre lay-up is preferred because it makes it easier for the severed ends of the fibres to spread apart under tension to produce tapered darts.

In this example the plies (including the cut plies) contain non-woven unidirectional fibres 50-54, but in other embodiments of the invention some or all of the plies (including the cut plies) may contain woven fibres.

In the embodiments above, the plies are cut by a rotary cutter 28 but other ways of forming the array of cuts include stamping, or an ultrasonic knife.

An alternative solution to the fibre wrinkling problem is to form each ply by fibre placement, optionally with continuous tow shearing. However such techniques are slow and can result in thickness variation across the ply. The embodiments described above enable a "full ply" manufacturing method to be used, which does not suffer from such problems.

In this example the method is used to form an aircraft spar 1, but in other embodiments a similar method many be used to form another aircraft structure such as a stringer in the wing, or a non-aircraft structure.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A composite structure comprising: a stack of composite plies, each composite ply comprising a layer of fibres; wherein the stack is formed with a kink; the kink has an inner side and an outer side; at least one of the plies is a cut ply with an array of cuts located at the kink; each cut severs a group of the fibres of the cut ply; and the array of cuts comprises a first row of cuts and a second row of cuts, wherein the first row of cuts is closer to the inner side of the kink than the second row of cuts, and a number of cuts in the first row is less than a number of cuts in the second row.

2. A composite structure according to claim 1, wherein the array of cuts has a tapered profile which becomes gradually narrower towards the inner side of the kink.

3. A composite structure according to claim 2, wherein the tapered profile is a triangular tapered profile.

4. A composite structure according to any preceding claim, wherein the array comprises three or more rows of cuts, each row comprising one or more cuts.

5. A composite structure according to any preceding claim, wherein a difference in the number of cuts between the first row and the second row is four or more.

6. A composite structure according to any preceding claim, wherein the cut ply is a 0° ply comprising unidirectional 0° fibres; at least one of the plies is a bias ply comprising unidirectional bias fibres which each run at an oblique angle to the unidirectional 0° fibres; and the bias ply does not have an array of cuts located at the kink.

7. A composite structure according to any preceding claim, wherein each cut has a relatively narrow end towards the inner side of the kink and a relatively wide end towards the outer side of the kink.

8. A composite structure according to any preceding claim, wherein the array comprises three or more rows of cuts, and the number of cuts per row decreases monotonically towards the inner side of the kink.

9. An aircraft comprising a composite structure according to any preceding claim.

10. A method of manufacturing a stack of fibre plies, each fibre ply comprising a layer of fibres, the method comprising: cutting at least one of the plies to provide a cut ply with an array of cuts, wherein each cut severs a group of fibres of the cut ply; and forming a kink in the stack, wherein the kink has an inner side and an outer side, the arrays of cuts is located at the kink, the array of cuts comprises a first row of cuts and a second row of cuts, the first row of cuts is closer to the inner side of the kink than the second row of cuts, and a number of cuts in the first row is less than a number of cuts in the second row.

11. A method according to claim 10, wherein the fibres are severed by a rotary cutter comprising a roller with an array of blades protruding from the roller.

12. A method according to claim 10 or 11, further comprising laying up the plies one-by-one to assemble the stack.

13. A method according to any of claims 10 to 12, wherein each cut opens up to form a tapered dart with a relatively narrow end towards the inner side of the kink and a relatively wide end towards the outer side of the kink.

14. A rotary cutter configured to cut a fibre layer, the rotary cutter comprising: a roller configured to rotate about an axis which extends in an axial direction from a first end of the roller to a second end of the roller; and an array of blades protruding from the roller, wherein the array of blades comprises a first row of blades and a second row of blades, and the first row of blades is closer to the first end of the roller than the second row of blades, wherein a number of blades in the first row is less than a number of blades in the second row.

15. A rotary cutter according to claim 14, wherein the array of blades has a tapered profile which becomes gradually narrower in the axial direction.
